# EUROPEAN PATENT SPECIFICATION

(11) **EP 0 556 409 B1**
(45) Date of publication and mention of the grant of the patent: **06.11.1996**
(21) Application number: 92918531.2
(22) Date of filing: 27.08.1992
(51) Int. Cl.: C04B 5/00, C04B 18/10, C04B 18/02, C21B 3/08

(54) **VESSEL FOR MOLTEN SLAG, AND METHOD AND DEVICE FOR MAKING HARD AGGREGATE FROM WASTE USING SAID VESSEL**
GEFÄSS FÜR GESCHMOLZENE SCHLACKE UND VERFAHREN UND VORRICHTUNG ZUR HERSTELLUNG VON HARTEM ZUSCHLAG AUS ABFALL DURCH BENUTZUNG DIESES GEFÄSSES
CUVE A LAITIER FONDU, PROCEDE ET DISPOSITIF DE PRODUCTION D'AGGREGAT DUR A PARTIR DE DECHETS AU MOYEN DE LADITE CUVE

(30) Priority: 06.09.1991 JP 227158/91; 06.09.1991 JP 227160/91; 04.02.1992 JP 19201/92
(43) Date of publication of application: 25.08.1993
(73) Proprietor: KABUSHIKI KAISHA KOBE SEIKO SHO, Kobe-shi Hyogo-ken 651 (JP)
(72) Inventor: YOSHIGAE, Takeo, Kobe-shi Hyogo-ken 651-22 (US); SUZUKI, Tomio, Kobe-shi Hyogo-ken 651-22 (JP); TANAKA, Hiroyuki, Kobe-shi Hyogo-ken 657 (US)
(74) Representative: Tiedtke, Harro, Dipl.-Ing.
(86) International application number: JP9201092
(87) International publication number: WO9304994

(56) References cited:
- EP-A- 0 033 133
- EP-A- 0 294 362
- JP-A- 1 138 162
- JP-A-58 003 818
- JP-A-59 164 669
- JP-B-58 001 060
- JP-U-57 176 434
- US-A- 3 227 431
- PATENT ABSTRACTS OF JAPAN vol. 7, no. 277 (C-199)9 December 1983 & JP-A-58 156 388 (NIHON GAISHI KK) 17 September 1983
- DATABASE WPI Week 8240, Derwent Publications Ltd., London, GB; AN 82-84851E & JP-A-57 140 366 (GIFU-SHI & NGK INSULATORS KK) 30 August 1982
- DATABASE WPI Week 834, Derwent Publications Ltd., London, GB; AN 83-07984K & JP-A-57 200 259 (DAIDO TOKUSHUKO KK) 8 December 1982
- DATABASE WPI Week 9103, Derwent Publications Ltd., London, GB; AN 91-018135 & JP-A-2 289 455 (WATANABE T) 29 November 1990
- DATABASE WPI Week 8536, Derwent Publications Ltd., London, GB; AN 85-220537 & JP-A-60 142 297 (DAIDO TOKUSHUKO KK) 27 July 1985

## Description

### TECHNOLOGICAL BACKGROUND

This invention relates to method and apparatus for producing molten slag from waste such as sludge and manufacturing hard aggregates by cooling the produced molten slag gradually, and to a molten slag container for use in this apparatus.

As a means for obtaining the hard aggregates from the waste such as sludge is known a method of melting incinerated ash of the waste in a temperature range of about 1300°C to 1600°C according to the composition thereof to produce molten slag and cooling the molten slag within a specified temperature range inducing crystalline precipitation within the composition.

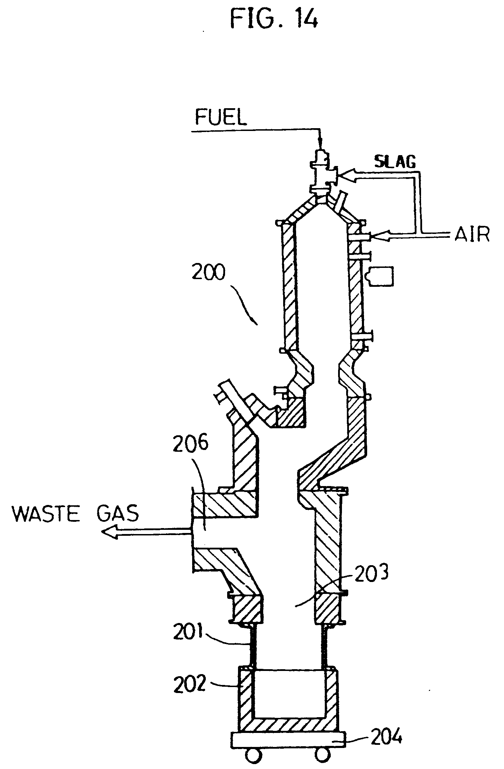

For realizing the manufacturing of the hard aggregates a slag pot type apparatus as shown, for example, in Fig. 14 is known . This apparatus is provided with a melting furnace 200 for melting the waste. A slag pot 202 is connected sealed to a discharge port 203 defined at the bottom end of the melting furnace 200 through a joint 201. The slag pot 202 includes a metal container and a heat insulating member made of firebricks, castables, and the like. The molten slag poured under sealed conditions from the melting furnace 200 into the slag pot 202 is cooled gradually therein so as to manufacture high strength aggregates.

Japanese Examined Patent Publication No. 1-59487 proposes a reheating type apparatus for manufacturing hard aggregates. In this apparatus, the molten slag produced in a melting furnace is poured into a water tank to be threby cooled and solidified suddenly. Thereafter, the cooled solid material is recovered from the water tank through a belt conveyor, and is crystallized by reheating the same through a flue to enhance the strength properties of the molten slag. In this apparatus, a combustion gas in the melting furnace is utilized to reheat the cooled solid matter in the flue to thereby economize the heat energy.

However, the prior art suffers from the following problems. In the apparatus shown in Fig. 14, in order to suppress a cooling rate of the molten slag, the molten slag must be poured after the slag pot 202 formed of the metal container and the heat insulating member is connected to the discharge port 203 of the melting furnace 200 completely sealed. More specifically, in this apparatus, the slag pot 202 must be connected to and detached from the discharge port 203 before and after an operation of pouring the molten slag in to the slag pot 202. Thus, this apparatus suffers the problems of a low production efficiency and a small production amount per unit time since the hard aggregates cannot be manufactured continuously. The amount of molten slag to be manufactured during one operation may be increased by increasing the capacity of the slag pot 202. However, the capacity of the slag pot 202 can be increased only to a limited extent.

Being formed by applying the heat insulating member made of firebricks, castables, or the like to the inner surface of the metal container, the slag pot 202 has low corrosive resistance against the molten slag and reacts with the molten slag easily. Thus, it is difficult to separate and take the molten slag from the slag pot 202 after cooling the same gradually. In the worst case, the slag pot 202 must be destroyed. Even if the molten slag can be taken from the slag pot 202 without destroying the same, it is extremely difficult to reuse the slag pot 202 and accordingly this apparatus is uneconomical.

On the other hand, it is possible to manufacture the hard aggregates continuously with the apparatus disclosed in Japanese Examined Patent Publication No. 1-59487. Since the hard aggregates manufactured by this apparatus are obtained by reheating the suddenly cooled solid matter to crystallize it, they are poor in strength when compared to the hard aggregates obtained by cooling the molten slag not suddenly but gradually. Further, since the molten slag is heated after being cooled, this apparatus suffers the big problem that a huge amount of heat energy is consumed despite the economy of using the combustion gas from the melting furnace.

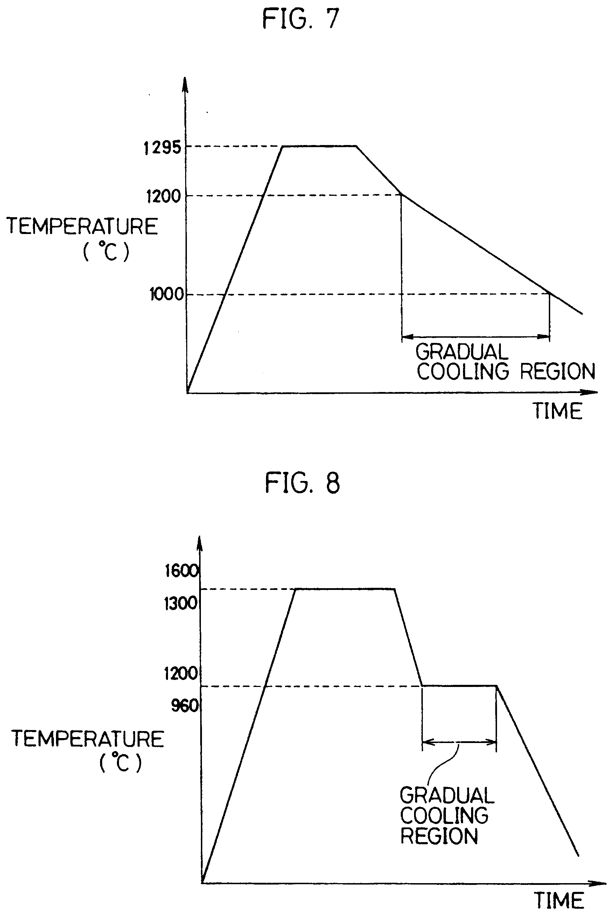

A method of setting the temperature and other parameters specifically is disclosed, for example, in Japanese Unexamined Patent Publication No. 57-140366. Specifically, lime sludge and incinerated ash of municipal waste are mixed in such a manner that a weight mixing ratio (hereinafter referred to as basicity) of CaO to SiO₂ is adjusted to lie in a range of 0.4 to 1.1. After the thus obtained mixture is molten in a temperature range of 1300 to 1600°C as shown in Fig. 8 to produce molten slag, the molten matter is crystallized by holding the same in a temperature range of 960 to 1200°C for 15 minutes during a cooling process. According to this method, it is possible to manufacture the hard aggregates having the maximum compressive strength of 1020 kg/cm². It is presently required to manufacture aggregates of even higher strengths.

In this case, higher strength aggregates can be obtained if the molten slag is cooled gradually over a long period of time by reducing exceedingly the cooling rate of the molten slag during the cooling process. However, if the cooling rate is set to a considerably smaller value, the time required for the cooling process is extended correspondingly. This brings about considerable reduction in the working efficiency. Further, since the molten slag must be held in the slag pot for a long time, an excessive equipment investment is inconveniently required.

In the case where only the crystalline aggregates manufactured according to the above method are used as a material for subgrade, voids are formed between the aggregates and the corrected CBR value, which is an index indicating the relative strength of materials for a roadbed subgrade, and the like, drops to 80% or smaller. Accordingly, the aggregates can be used for a lower layer subgrade whose discrimination standard by the corrected CBR value is 30% or larger, but cannot be used for an upper layer subgrade whose discrimination standard by the corrected CBR value is required to be 80% or larger. Thus, the aggregates have limited application as the materials for the subgrade

In view of the problems residing in the prior art, it is an object of the invention to provide method and apparatus capable of manufacturing hard aggregates of good quality efficiently and, more preferably, to provide a method of manufacturing efficiently aggregates harder than the prior art, especially aggregates suitable for an upper layer subgrade material. **DISCLOSURE OF THE INVENTION**

In order to solve the above problems, the invention is constructed as follows.

Specifically, the invention is directed to a molten slag container into which molten slag made from waste is poured. The molten slag container comprises a heat insulating member formed into a container open upward; and a mold made of metal more excellent in the corrosive resistance against the molten slag than the heat insulating member and provided at least on an inner side surface of the heat insulating member (claim 1).

With the molten slag container thus constructed, by a heat retaining action of the heat insulating member, the poured molten slag can be cooled gradually at a sufficiently slow cooling rate without making the capacity of the molten slag container excessively large, thus enabling the reliable manufacturing of hard aggregates of good quality . The cooling temperature at which the molten slag poured into the molten slag container is cooled can be adjusted according to the shape of the heat insulating member constituting the molten slag container, particularly the thickness of the heat insulating member. In addition, since the mold made of metal more excellent in the corrosive resistance than the heat insulating member is provided on the inner surface of the molten slag container, the molten slag container and the molten slag hardly react with each other and accordingly the slag can be separated and taken easily from the molten slag container after the gradual cooling. Thus, the same molten slag container can be used a number of times.

If a lid is mounted openably and closably at a top portion of the molten slag container (claim 2), the cooling temperature for the molten slag can be suppressed further by closing the lid after pouring the molten slag into the molten slag container. Thus, hard aggregates of good quality can be manufactured over the entire volume of the molten slag container including the area in the vicinity of the opening of the container. Further, if the lid is double hinged (claim 3), the amount the lid projects is smaller compared to the single hinged lid when the lid is open. This leads to a smaller construction of the heat insulating chamber for accommodating the molten slag container, and therefore thermal energy required to maintain the temperature in the heat insulating chamber can be economized.

The invention is also directed to a method of producing hard aggregates from waste using the molten slag container. This apparatus comprises the steps of melting the waste in a melting furnace to produce molten slag while loading the molten slag container into a heat insulating chamber whose inner temperature is maintained at a predetermined value suitable to cool the molten slag gradually; and pouring the molten slag into the molten slag container in the heat insulating chamber so as to cool the molten slag in the molten slag container (claim 4).

According to this method, the molten slag produced in the melting furnace is poured through the discharge port of the melting furnace into the molten slag container in the heat insulating chamber. Since the interior of the heat insulating chamber is maintained at the predetermined temperature for the gradual cooling, the molten slag is neither cooled suddenly when being poured into the molten slag container nor solidified in the vicinity of the discharge port so as to block the same even if the discharge port does not seal with the molten slag container. After a predetermined amount of molten slag is poured into the molten slag container, this container is conveyed forward and the next molten slag container is conveyed to the position below the discharge port instead, thereby pouring the molten slag continuously. Accordingly, the hard aggregates of good quality can be manufactured efficiently at a low cost.

More specifically, after melting raw ash which is incinerated ash, the molten slag is cooled at a cooling rate of 0.4°C/min. in the case where a weight ratio of CaO to SiO₂ in the raw ash is not smaller than 0.8 but smaller than 0.9; at the cooling rate of 0.7°C/min. in the case where the weight ratio of CaO to SiO₂ in the raw ash is not smaller than 0.9 but smaller than 1.0; at the cooling rate of 1.5°C/min. in the case where the weight ratio of CaO to SiO₂ in the raw ash is not smaller than 1.0 but smaller than 1.1; at the cooling rate of 2.0°C/min. in the case where the weight ratio of CaO to SiO₂ in the raw ash is not smaller than 1.1 but smaller than 1.2; at the cooling rate of 3.0°C/min. in the case where the weight ratio of CaO to SiO₂ in the raw ash is not smaller than 1.2 but smaller than 1.3; and at the cooling rate of 5.0°C/min. in the case where the weight ratio of CaO to SiO₂ in the raw ash is not smaller than 1.3 (claim 5). Accordingly, hard aggregates having high strength can be manufactured constantly independently of the composition of raw materials.

It is preferable to set the basicity not lower than 0.8 but not higher than 1.3 (claims 6). The basicity is set in this range for the following reasons. The crystalline substances are hard to produce, even when the cooling rate is slowed, in the region where the basicity is lower than 0.8. In the region where the basicity is higher than 1.3, the melting temperature rises too high and therefore the life of the heat insulating member provided in the melting furnace is shortened. This is not desirable in maintaining and managing an operation.

If the final volume proportion of crystalline substances in solidified slag obtained by cooling the molten slag is adjusted in the range not smaller than 13% but not larger than 54%, hard aggregates suitable for an upper layer subgrade can be manufactured reliably independent of the composition of the raw materials (claim 7). When these aggregates are used as the subgrade material, the glassy substances are crushed and fill the voids between the crystalline aggregates. Thus, according to this method, the hard aggregates are prone to provide a greatly extended range of utilities. In addition, the cooling process can be shortened compared to the case where all the molten slag is crystallized as in the conventional method, thereby improving the productivity of the hard aggregates greatly.

An apparatus for realizing the above method preferably comprises a melting furnace for melting the waste and discharging the molten waste as molten slag through a discharge port defined at a bottom portion thereof; a heat insulating chamber into which the discharge port is inserted from above; heat retaining means for maintaining an internal temperature of the heat insulating chamber at a value suitable to cool the molten slag gradually; and conveyance means for conveying a plurality of molten slag containers one after another to a position where the molten slag container receives the molten slag discharged through the discharge port of the melting furnace (claim 8).

If the heat retaining means includes gas aspiration means for aspirating gas in the heat insulating chamber so as to promote the outflow of combustion gas from the melting furnace to the heat insulating chamber through the discharge port (claim 9), the exhaust of the combustion gas can be promoted through the discharge port of the melting furnace by the aspiration of the gas in the heat insulating chamber. The interior of the heat insulating chamber is kept warm by the heat of the combustion gas. Accordingly, the interior of the heat insulating chamber can be kept warm efficiently using the waste heat from the melting furnace without providing a special heating means. Further, the promotion of the exhaust of the combustion gas prevents the slag from blocking the discharge port.

Furthermore, if the heat retaining means includes temperature detecting means for detecting the temperature in the heat insulating chamber and temperature control means for controlling the operation of the gas aspiration means in accordance with the detected temperature (claim 10), the operation of the gas aspiration means is controlled in accordance with the temperature in the heat insulating chamber detected by the temperature detecting means. Thus, the temperature in the heat insulating chamber can be adjusted automatically, thereby saving on labour. **BRIEF DESCRIPTION OF THE DRAWINGS**
Fig. 1 is a diagram showing an overall construction of a first apparatus for manufacturing hard aggregates according to the invention;
Fig. 2 is a side view in section showing an interior construction of a heat insulating chamber and a drive chamber in the first apparatus:
Fig. 3 is a front view showing the interior construction of the heat insulating chamber and the drive chamber;
Fig. 4 is a fragmentary front view in section showing a coupling structure of an inner mold with an outer mold of a molten slag container in the first apparatus;
Fig. 5 is a fragmentary front view in section showing the interior construction of the heat insulating chamber;
Fig. 6 is a graph showing a cooling rate of molten slag over elapsed time in the case where the molten slag container in the first apparatus is used and where a molten slag container not including a heat insulating member is used;
Fig. 7 is a graph showing contents of temperature maneuvering in a second embodiment;
Fig. 8 is a graph showing an example of temperature maneuvering according to a conventional method;
Fig. 9 is a graph showing the uniaxial compression strength of hard aggregates manufactured by a method according to the second embodiment;
Fig. 10 is a graph showing a corrected CBR value of the hard aggregates manufactured by the above method;
Fig. 11 is a graph showing a corrected CBR value as related to a volumetric proportion of crystal slag in the solidified slag in a third embodiment;
Fig. 12 is a side view in section showing an apparatus for manufacturing hard aggregates which is used in the third embodiment;
Fig. 13A is an enlarged view showing a portion A in Fig. 12;
Fig. 13B is a diagram viewed from a direction of an arrow B in Fig. 13A; and
Fig. 14 is a front view in section showing an exemplary conventional apparatus for producing hard aggregates.

### BEST MODES FOR EMBODYING THE INVENTION

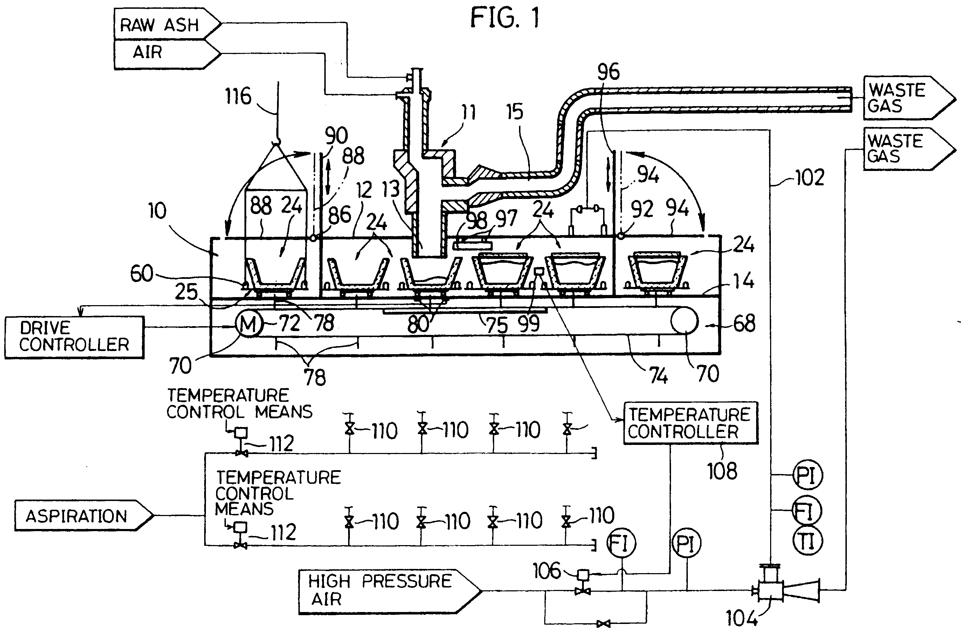

A first embodiment of the invention will be described with reference to Figs. 1 to 6.

An apparatus for manufacturing hard aggregate shown in Fig. 1 is provided with a heat insulating chamber 10 extending in a horizontal direction (a traverse direction in Fig. 1) and a melting furnace 11 for melting waste such as sludge. At a bottom end of the melting furnace 11 is defined a discharge port 13. A combustion gas exhaust pipe 15 is connected to the melting furnace 11 above the discharge port 13. A lower portion of the melting furnace 11 is inserted into the interior of the heat insulating chamber 10 so that the discharge port 13 is located inside the chamber 10.

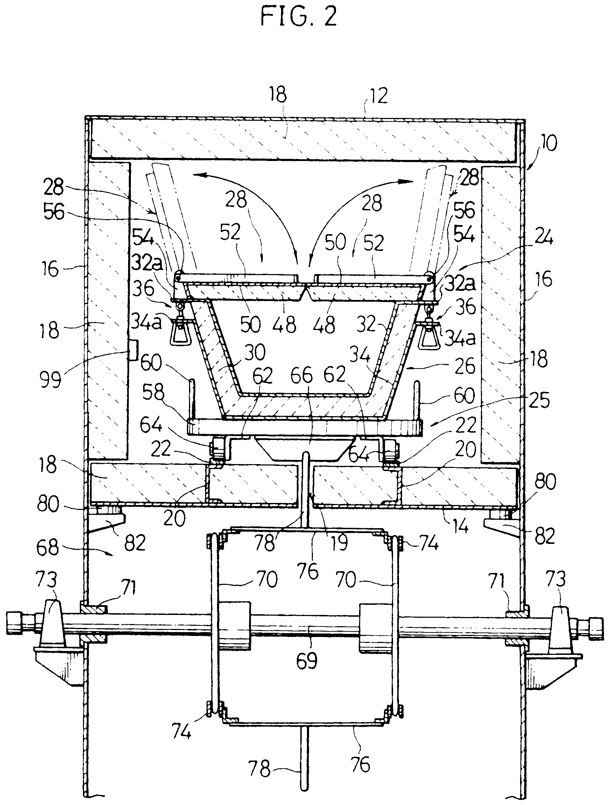

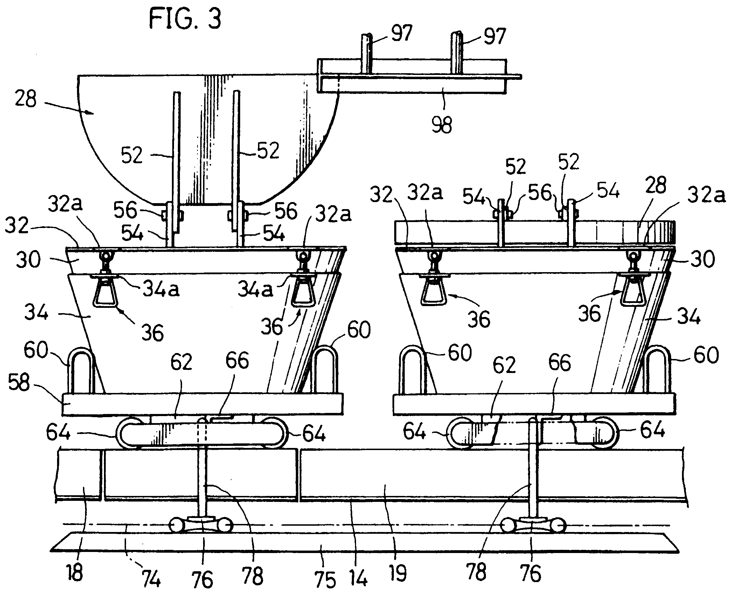

As shown in Fig. 2, the heat insulating chamber 10 is enclosed by a top board 12, a bottom board 14, and opposite side boards 16. Inner surfaces of the boards 12, 14, 16 are covered entirely with heat insulating members 18 for maintaining the interior of the heat insulating chamber 10 at a high temperature. Left and right support members 20 extending in the same direction as the heat insulating chamber 10 are impregnated in the heat insulating member 18 covering over the upper surface of the bottom board 14. A guide rail 22 extending in the same direction as the support member 20 is laid over an upper face of each support member 20. A plurality of trucks 25 (constituting in part conveyance means) each having a molten slag container 24 loaded thereon are mounted over the guide rails 22 as shown in Fig. 3.

Each molten slag container 24 includes a container main body 26 and lids 28 provided so as to open and close an opening defined at the top of the container main body 26. The container main body 26 includes a heat insulating member 30 formed into a container open upward, inner and outer molds 32, 34 provided respectively on inner and outer surfaces of the heat insulating member 30. Specifically, the container main body 26 is formed by covering the heat insulating member 30 over the inner mold 32 and by covering the outer mold 34 over the heat insulating member 30. Materials for the heat insulating member 30 are preferably those having excellent heat resistance and heat retaining property such as ceramic fiber. Materials for the inner and outer molds 32, 34 are preferably metals having more excellent corrosive resistance against the molten slag than the heat insulating member 30, particularly SUS310S or the like having low oxidation loss.

At a plurality of positions at upper ends of the inner and outer molds 32, 34 are formed jaw portions 32a, 34a projecting outward radially of the container. The corresponding jaw portions 32a, 34a are coupled with each other through a coupling member 36.

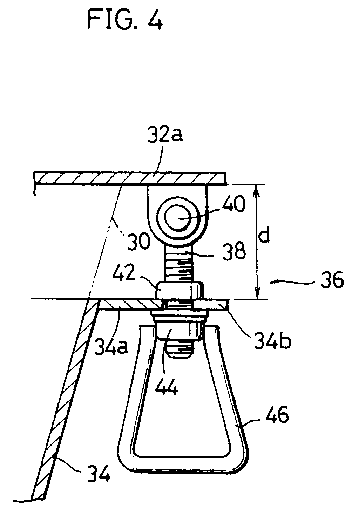

As shown in Fig. 4, each coupling member 36 includes a bolt 38 extending vertically. An upper end of the bolt 38 is mounted to the jaw portion 32a of the inner mold 32 rotatably about a horizontal axis 40. On the contrary, a notch 34b is formed in the jaw portion 34a of the outer mold 34 such that the bolt 38 is inserted therethrough from a radially outward direction. With the bolt 38 inserted through the notch 34b, a set nut 42 and a wing nut 42 with a wing 46 are fastened respectively from above and below and the jaw portions 32a, 34a are coupled with each other while holding the jaw portion 34a with the nuts 42, 44. A distance d between the jaw portions 32a and 34a can be adjusted by changing the position of the set nut 42. This enables the heat insulating member 30 of different thickness to be held tightly between the molds 32, 34 and enables the adjustment of the thickness of the heat insulating member 30 in order to avoid the compaction of the heat insulating member 30.

The lids 28 are mounted at left and right upper ends of the container main body 26, and is of a so-called double hinged structure in which the lids 28 are openable from the center of the container main body 26 toward the opposite sides thereof. The respective lids 28 are formed of heat insulating members 48 similar to the heat insulating member 30. Metal plates 50 similar to the inner and outer molds 32, 34 are covered over the outer surface of the heat insulating members 48. On the outer surfaces of the metal plates 50 are fixed a plurality of aggregates 52 (two aggregates in Fig. 2) extending in the traverse direction. On the contrary, support plates 54 are provided upright on an upper end face of the container main body 26. Outer end portions of the aggregates 52 are mounted to the support plates 54 rotatably about horizontal axes 56 and thereby the left and right lids 28 are mounted on the container main body 26 openably and closably.

Each truck 25 mounting thus constructed molten slag container 24 thereon includes a horizontal extending truck main body 58. The molten slag container 24 is placed and fixed on the truck main body 58 with a suitable means. Suspension members (reverse U-shaped members in the illustrated example) are fixed at suitable peripheral positions on the upper surface of the truck main body 58. At a plurality of positions (transversely and longitudinally spaced apart four positions in the illustrated example) on the underside of the truck main body 58 are mounted casters 64 rotatably through brackets 62. These casters 64 are placed rollably on the guide rails 22, and thereby the molten slag container 24 and the truck 25 are allowed to move along the guide rails 22.

Below the heat insulating chamber 10 is located a drive chamber 68 as shown in Figs. 1 to 3. At front and rear end positions (left and right end positions in Fig. 1) in the drive chamber 68 are supported horizontal shafts 69 rotatably at a housing of the drive chamber 68 through bearings 71, 73. Each horizontal shaft 69 extends in the traverse direction as shown in Fig. 2 through bearings 71, 73, and has a pair of transversely spaced apart sprockets 70 fixed thereon. Either the front or rear horizontal shaft 69 (rear horizontal shaft in the illustrated example) is drivingly rotated by a motor (constituting in part the conveyance means) 72 shown in Fig. 1.
A chain (constituting in part the conveyance means) 74 is wound around the corresponding pair of front and rear sprockets 70. The two chains 74 are coupled with each other through a plurality of coupling plates 76 arranged in a lengthwise direction of the chains 74. A push bar 78 projects outward from a center portion of an outer surface of each coupling plate 76. On the other hand, a slit 19 having the width greater than a diameter of the push bars 78 and extending entirely in the longitudinal direction of the heat insulating chamber 10 is defined at transverse center portions of the bottom board 14 forming the heat insulating chamber 10 and the heat insulating member 18 placed on the board 14. The push bars 78 are inserted through the slit 19 so that upper end portions thereof face the interior of the heat insulating chamber 10 (Figs. 2 and 3).

On the contrary, an engaging member 66 projects downward from the underside of the main body 58 of each truck 25. The engaging members 66 come to contact with the upper end portions of the push bars 78. Accordingly, the sprockets 70 and the chains 74 are driven by the motor 72, and the push bars 78 mounted to these chains 74 move along the slit 19 while being faced to the interior of the heat insulating chamber 10. The engaging members 66 of the respective trucks 25 are pushed by the respective push bars 78 from behind (from the left in Fig. 1), and thereby the trucks 25 are allowed to move forward.

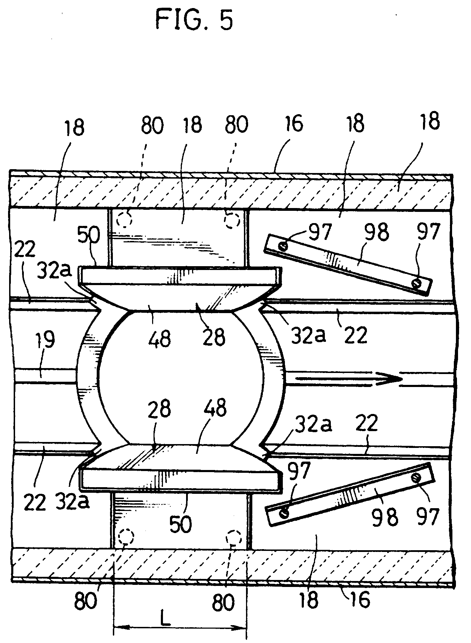

As shown in Figs. 3 and 5, at the bottom board 80, the heat insulating member 18 placed on the board 80, the support members 20, and the guide rails 22, a portion located right below the melting furnace 11 are detached from the other portion. The detached portion is supported on the side boards 16 through a plurality of (four in the illustrated example) load cells 80 and brackets 82 as shown in Figs. 2 and 5. The length L (see Fig. 5) of the detached portion is substantially equal to the length of one truck 25. Accordingly, the load cells 80 detect the overall weight of the truck 25 and the melting slag container 24 located on this detached portion, i.e. the overall weight of the truck 25 and the melten slag container 24 located right below the melting furnace 11 together with the weight of the heat insulating member 18 at the detached portion.

Detection signals from these load cells 80 are input to a drive controller 84 shown in Fig. 1. This drive controller 84 actuates the motor 72 when the total weight detected by the load cells 80 reaches a predetermined value which specifically corresponds to the total weight when the molten slag container 24 is substantially filled with the molten slag. Thereupon, the chains 74 are driven by the arrangement pitch of the push bars 78, i.e. the spacing between the trucks 25.
In the heat insulating chamber 10, a pair of left and right lids 98 are suspended from the top board 12 through vertical shafts 97 at a position right before the discharge port of the melting furnace 11 (right of the discharge port in Fig. 1). As shown in Fig. 5, the respective lids 98 are arranged such that a distance between front portions thereof (right portions in Fig. 5) is narrower than the one between rear portions thereof when viewed from above. When the molten slag container 24 with the lids 28 open passes the position where the lids 98 are arranged, the lids 28 come to contact with the corresponding lids 98 and are pushed toward the center, with the result that the lids 28 are closed automatically due to the weight thereof.

As shown in Fig. 1, a revolving door 88 rotatable about a horizontal axis 86 is provided at a rear end position of the top board 12 forming the heat insulating chamber 10. An elevating door 90 movable upward and downward is provided at a position right before the revolving door 88. Likewise, a revolving door 94 rotatable about a horizontal axis 92 is provided at a front end position of the top board 12. An elevating door 96 movable upward and downward is provided at a position right after the revolving door 94.

The heat insulating chamber 10 is connected to an ejector pump (gas aspiration means) 104 through a gas aspiration pipe 102 as shown in Fig. 1. To the ejector pump 104 is introduced high pressure air through an automatic supply valve (constituting temperature control means) 106. Gas in the heat insulating chamber 10 is aspirated through the gas aspiration pipe 102 by a negative pressure generated when the high pressure air is introduced to the ejector pump 104. The drive chamber 68 is in communication with the outside of the system through a plurality of valves 110, an intake pipe 111, and automatic intake valves 112. The gas in the heat insulating chamber 10 is aspirated by the ejector pump 104 when the valves 110 and the automatic intake valves 112 are opened. Thereby, air is supplied to the heat insulating chamber 10 through the drive chamber 68 and the slit 19 from the outside the system (i.e. an intake operation is carried out).

Further, a temperature detector 99 including a thermocouple for detecting the temperature in the heat insulating chamber 10 is disposed at a suitable position in the chamber 10, e.g., a position between the discharge port 13 of the melting furnace 11 and the gas aspiration position. A detection signal from the detector 99 is input to a temperature controller 108 as shown in Fig. 1.

This temperature controller 108 controls the automatic supply valve 106 and the automatic intake valves 112 to open or close so as to maintain the temperature in the heat insulating chamber 10 detected by the temperature detector 99 at a predetermined value for the gradual cooling (500°C in this embodiment). For example, if the detected temperature is lower than 500°C, the automatic supply valve 106 is opened to aspirate the gas and the combustion gas is thereby introduced to the heat insulating chamber 10 through the discharge port 13 of the melting furnace 11. The heat energy of the combustion gas is used to increase the temperature in the heat insulating chamber. On the other hand, if the detected temperature is higher than 500°C, the control is executed such that the automatic supply valve 106 is closed to stop the aspiration of the gas, or that the automatic intake valve 112 is opened to admit the air into the heat insulating chamber 10 through the drive chamber 68 so as to cool the interior of the chamber 10 while the gas is aspirated. The reason why the temperature in the heat insulating chamber 10 is controlled so as not to exceed 500°C is to prevent the thermal deformation and oxidation loss of exposed metal due to an abnormal temperature increase in the chamber 10.

An action of this apparatus will be described next.

First of all, a plurality of molten slag containers 24 and trucks 25 are arranged at equal intervals on the guide rails 22 in the heat insulating chamber 10 and one molten slag container 24 is positioned below the discharge port 10 of the melting furnace 11. The molten slag containers 24 and the trucks 25 are preferably loaded into the heat insulating chamber 10 as follows. The truck 25 is suspended together with the molten slag container 24 by means of a crane rope shown in Fig. 1, using the suspension members 60 provided at the truck 25. In this state, the truck 25 and the molten slag container 24 are integrally loaded into the heat insulating chamber 10 through the revolving door 88. At this loading stage, the lids 28 of the molten slag container 24 are kept open. In order to prevent the heat radiation from the heat insulating chamber 10, it is preferable to close at least one of the revolving door 88 and the elevating door 90 and close at least one of the revolving door 94 and the elevating door 96 constantly.

In this state, the waste such as sludge is molten in the melting furnace 11 and the melts (molten slag) are poured into the lower located molten slag container 24 through the discharge port 13. Since the temperature in the heat insulating chamber 10 is maintained at about 500°C by the control of the temperature controller 108 when the molten slag is poured into the container 24, the molten slag is not cooled suddenly even if the discharge port 13 and the container 24 are not connected sealably. Neither is the discharge port 13 blocked with solidified slag.

When a specified amount of molten slag is poured into the molten slag container 24 in this way and the total weight detected by the load cells 80 reaches the predetermined value, the drive controller 84 actuates the motor 72 during a specified period in accordance with the detection signals from the load cells 80. The operation of the motor 72 drives the sprockets 70 and the chains 74 by one pitch, and the push bars 78 fixed to the chains 74 push the engaging members 66 provided at the trucks 25 to thereby move the respective trucks 25 forward by one pitch. This causes the molten slag container 24 having the molten slag poured there into to move forward from the position below the discharge port 13 and brings the next molten slag container 24 to the position below the discharge port 13. In this manner, the molten slag is poured continuously into the molten slag containers.

The molten slag container having moved from the position below the discharge port 13 passes the point where the lids 98 are arranged. At this time, the lids 28 come to contact with the lids 98 to be thereby pushed inward and are consequently closed automatically due to the weight thereof. In this state, the molten slag in the container 24 is cooled gradually at a cooling rate according to the shape of the heat insulating member 30 constituting the container 24, particularly the thickness thereof, and is solidified gradually.

When the molten slag container 24 reaches the front end position (the most rightward position in Fig. 1), the elevating door 96 is closed and the revolving door 94 is opened and the molten slag container 24 together with the truck 25 are pulled up from the heat insulating chamber 10 by the crane rope 116 or other means. Thereafter, the solidified slag is taken from the molten slag container 24 after the molten slag is completely cooled after the gradual cooling. Since the inner surface of the container 24 is formed of the inner mold 32 made of the metal excellent in the corrosive resistance such as SUS310S, the container 24 and the molten slag 24 hardly react with each other. Thus, the slag can be separated and taken from the container 24 easily after the gradual cooling.

At the same time when the molten slag container 24 and the truck 25 are unloaded, new molten Slag container 24 and truck 25 are loaded into the heat insulating chamber 10 through the revolving door 88.

As seen from the above, in this apparatus, the molten slag produced in the melting furnace 11 is poured into a plurality of molten slag containers 24 including the heat insulating members 30 one after another in the heat insulating chamber 10 whose temperature is maintained at the predetermined value. Accordingly, the molten slag can be poured into the molten slag containers 24 continuously without cooling the same suddenly. In addition, the molten slag can be cooled gradually at a sufficiently low cooling rate by a heat retaining action brought about by the heat insulating member 30 provided in the container 24 after the molten slag is poured into the container 24. Therefore, the above apparatus is capable of manufacturing hard aggregates which are high in the strengthity and of good quality.

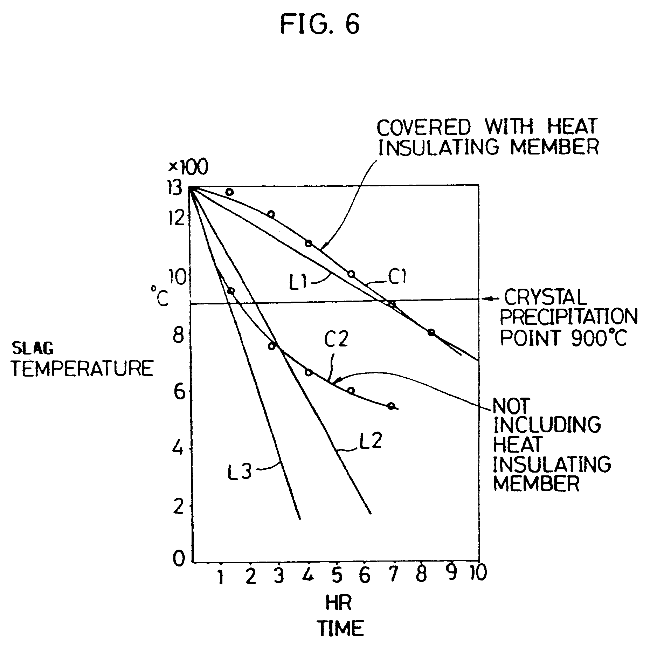

Fig. 6 is a graph showing the slag temperature over time, wherein curves C1, C2 represent respectively a case where the molten slag container 24 covered with the heat insulating member 30 is used as in the foregoing embodiment and a case where a molten slag container not including the heat insulating member 30 is used. In this graph, straight lines L1, L2, L3 represent the slag temperature over time for references in the case where the cooling rate is 1°C/m, 3°C/m, 5°C/m respectively. It is clearly seen from this graph that the cooling rate of the molten slag is suppressed sufficiently and the hard aggregates of good quality can be manufactured by using the molten slag container 24 covered with the heat insulating member 30. In addition, the cooling rate can be adjusted to a proper value according to the composition of the raw waste by changing the thickness of the heat insulating member 30.

With the above apparatus embodying the invention, the following effects are further obtainable.
(a) Since the lids 28 are mounted on the container main body 26, the cooling rate can be slowed further and the gradually cooled slag of good quality can be produced in the vicinity of the upper end portion of the molten slag container 24 as well as a bottom portion thereof by closing the lids 28 after pouring the molten slag. In addition, since the lids 28 are double hinged, a projected amount of the lids 28 is smaller compared to a lid of the single hinged structure. Thus, the heat insulating chamber 10 takes up smaller space and the heat energy required to maintain the temperature in the chamber 10 can be saved as much as the reduced space. Further, since the lids 28 are closed upon coming to contact with the lids 98 while the molten slag container 24 is conveyed, the heat retaining effect of the molten slag container 24 can be enhanced reliably in a simple structure.
(b) Since the double doors are provided at the front and rear end portions of the heat insulating chamber 10, it is prevented to cause the heat in the chamber 10 to escape at a positive pressure while to aspirate a large amount of external cool air at a negative pressure when the molten slag container 24 is loaded or unloaded by closing the elevating doors 90, 96 when the revolving doors 88, 94 are opened.
(c) As a means for maintaining the temperature in the heat insulating chamber 10 at a specified value, the interior of the chamber 10 is heated by aspirating the gas from the chamber 10 and drawing the combustion gas in the melting furnace 11 at the negative pressure generated by the aspiration. Accordingly, the interior of the chamber 10 can be heated efficiently using the waste heat of the melting furnace 11 without installing a special heating apparatus, and the blocking of the discharge port 13 can be prevented more reliably. Further, the interior of the chamber 10 can be cooled rapidly by opening the automatic intake valves 112 when the gas is aspirated and by admitting the air into the chamber 10 through the drive chamber 68.
(d) Since there are provided the temperature detector 99 for detecting the temperature in the heat insulating chamber 10 and the temperature controller 108 for opening or closing the automatic supply valve 106 and the automatic intake valves 112 in accordance with the detected temperature, the temperature in the chamber 10 can be controlled automatically and labors can be saved.
(e) Since the coupling member 46 including two nuts 42, 44 is provided as a means for coupling the inner and outer molds 32, 34, the spacing between the two molds 32, 34 can be adjusted easily. Thus, the heat insulating member 30 of different thickness can be mounted between the molds 32, 34 easily.

A second embodiment will be described next with reference to Figs. 7 to 10. In this embodiment is shown a method of manufacturing hard aggregates having sufficient uniaxial compressive strength efficiently.

A basic construction of this method is similar to the one shown in the foregoing first embodiment, but the basicity of material ash is adjusted in advance in this embodiment. Specifically, in the case where the basicity of the raw ash, i.e. weight ratio of CaO to SiO₂, is higher than 1.3, quartz sands (SiO₂) are added to the raw ash so as to adjust the basicity in a range of 0.8 to 1.3. When the basicity is lower than 0.8, crystals are not liable to precipitate however much a cooling rate is slowed. On the contrary, when the basicity is in excess of 1.3, there arises a problem that a life of a heat insulating member constituting an inner wall of a melting furance is shortened due to an excessively high melting temperature, etc. Further, the higher the basicity of the raw material, the higher the melting temperature of the raw ash. Accordingly, it will be appropriate to set the melting temperature high according to the basicity to the degree that melts are allowed to have sufficient fluidity. However, in consideration of the extension of the life of the heat insulating member in the melting furnace, it is desirable to set the melting temperature lower than 1300°C.

Thereafter, the molten slag is poured into a molten slag container 2 similar to the first embodiment. The solidified slag is taken from the molten slag container 24 after the molten slag is completely cooled after the gradual cooling. A cooling temperature range of the molten slag in the container 24 has a specified temperature width including in the middle thereof a crystal precipitation point. A specific temperature value may be set desirably. However, in a region in excess of about 1200°C, crystalline nuclei are unlikely to be formed and grown. Further, the crystal growth stops in a region below 1000°C. Accordingly, it is desirable to cool the molten slag gradually in a region defined by these limits, i.e. in a temperature range of about 1000°C to 1200°C (see Fig. 7). Although being adjusted desirably according to the shape of the heat insulating member 30, particularly the thickness thereof, the cooling rate is preferably set according to the basicity of the raw material as shown in TABLE-1 below.

**TABLE 1**

| CaO/SiO₂ (x) (WEIGHT %) | COOLING RATE (°C/min.) |
|---|---|
| 0.8 ≦ x < 0.9 | not higher than 0.4 |
| 0.9 ≦ x < 1.0 | not higher than 0.7 |
| 1.0 ≦ x < 1.1 | not higher than 1.5 |
| 1.1 ≦ x < 1.2 | not higher than 2.0 |
| 1.2 ≦ x < 1.3 | not higher than 3.0 |

By setting the cooling rate according to the basicity, the hard aggregates having high strengthity can be manufactured constantly efficiently. This can be seen from data shown in TABLE-2 below.

**TABLE 2**

| COOLING RATE (°C/min.) | CaO/SiO₂ WEIGHT RATIO | | | | | |
|---|---|---|---|---|---|---|
| | 0.8 | 0.9 | 1.0 | 1.1 | 1.2 | 1.3 |
| 0.4 | ○ | ○ | ○ | ○ | ○ | ○ |
| 0.7 | △ | ○ | ○ | ○ | ○ | ○ |
| 1.0 | X | △ | ○ | ○ | ○ | ○ |
| 1.5 | | X | ○ | ○ | ○ | ○ |
| 2.0 | | | △ | ○ | ○ | ○ |
| 3.0 | | | X | △ | ○ | ○ |
| 5.0 | | | | X | △ | ○ |
| 10.0 | | | | | X | △ |
| 20.0 | | | | | | X |
| ○: CRYSTALLINE SLUG PRODUCED △: CRYSTALLINE/NONCRYSTALLINE SLUG INCLUDED X: NONCRYSTALLINE SLUG PRODUCED | | | | | | |

TABLE-2 shows examination results of crystal precipitation when slags of various values of the basicity in a CaO/SiO₂ range of 0.8 to 1.3 are cooled gradually at various cooling rates. In this examination, it is discriminated through an X-ray diffraction whether the slag is crystalline or not. More specifically, the above discrimination is made based on a peak value of the intensity of a diffracted wave (the peak value is high in the case of the crystalline slag). The raw material in use has a rough composition of CaO: 25 to 40%, Fe₂O₃: 10 to 20%, P₂O₆: 3 to 10%, Al₂O₃: 5 to 20% such as general lime sludge.

As is clear from TABLE-2, the substantially low cooling rate is required to obtain the crystalline slag in the range where the basicity is low. However, in the range where the basicity is relatively high, the crystalline slag can be obtained even without reducing the cooling rate greatly. Accordingly, the hard aggregates having high strengthity are manufactured reliably while reducing the cooling rate sufficiently in the low basicity region while the hard aggregates having high strengthity are manufactured efficiently at a relatively high cooling rate in the high basicity region by cooling the molten slag gradually under the conditions shown in TABLE-1.

In the case where the basicity is adjusted in excess of 1.3, the cooling rate is preferably set at 5.0°C/min. or lower as is clear from TABLE-2.

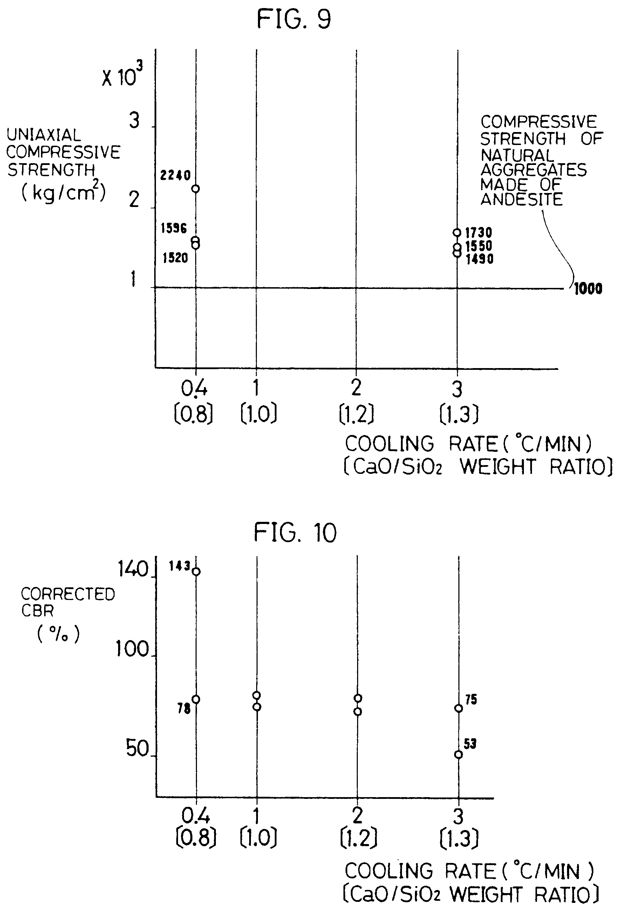

Fig. 9 shows the uniaxial compressive strength of the hard aggregates obtained by cooling slags having various values of basicity gradually at maximum permissible cooling rates shown in TABLE-1. As shown in this figure, the compressive strength of natural aggregates made of andesite is 1000 kg/cm²1, and the compressive strength of the aggregates produced by the method disclosed in the aforementioned publication is at maximum 1020 kg/cm². Contrary to this, according to the method of this embodiment, the aggregates having strength at least one and half times as much as the above values can be manufactured.

Fig. 10 shows corrected CBR values (%) of the hard aggregates obtained by cooling the slags having various values of basicity gradually at maximum permissible cooling rates shown in TABLE-1 similar to the foregoing. Here, a CBR (California Bearing Ratio) is an index indicating the relative strength of the roadbed and subgrade material, and the like, and represents in percentage a value obtained by dividing a load required to insert a specific piston into soil up to a given depth by a predetermined standard load corresponding to an inserted amount of the piston. The corrected CBR is a value obtained by correcting the CBR in accordance with a specified standard. If the corrected CBR is 3% or larger, the hard aggregates are discriminated to be suitable for the roadbed material. If the corrected CBR is 20% or larger, the hard aggregates are discriminated to be suitable for the lower layer subgrade material. If the corrected CBR is 80% or larger, the hard aggregates are discriminated to be suitable for the upper layer subgrade material. Thus, the method of this embodiment is capable of providing hard aggregates which can be used sufficiently at least as the lower layer subgrade material.

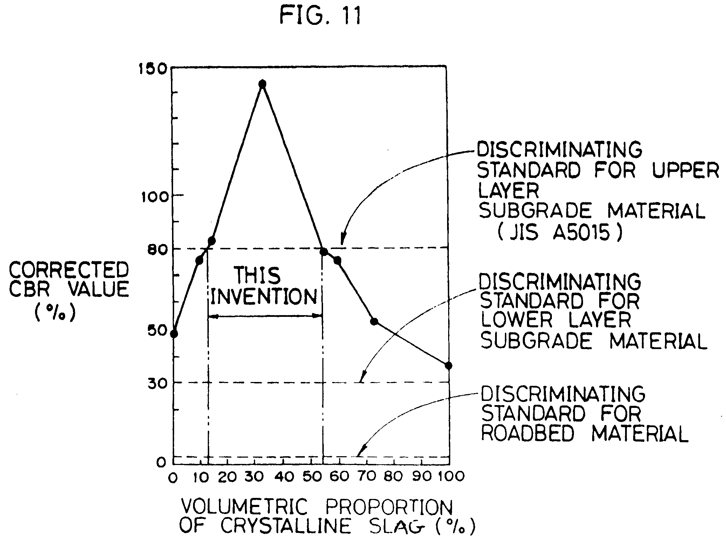

A third embodiment will be described next with reference to Figs. 11 to 13. In this embodiment is shown a method of producing more efficiently hard aggregates which can be also used as upper layer subgrade material.

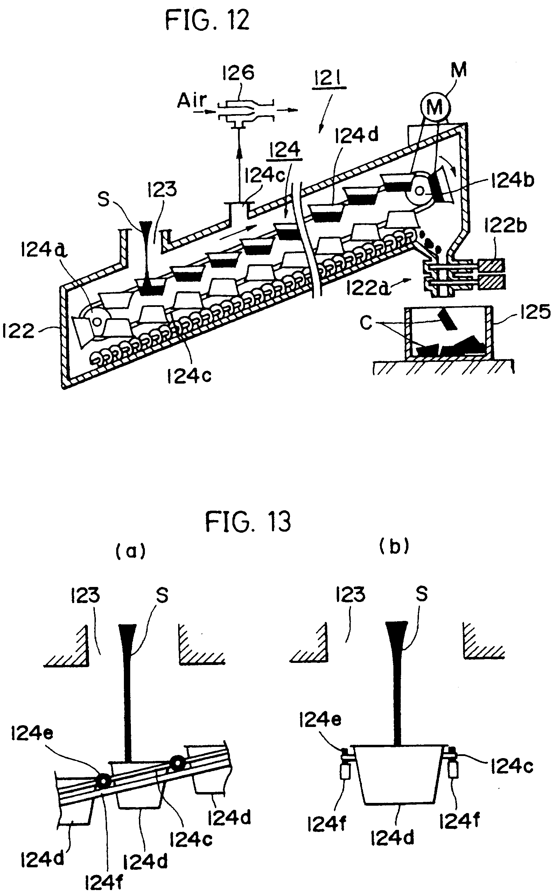

An apparatus 121 for producing solidified slag shown in Figs. 12 and 13 is provided below a melting furnace for melting raw ash which is incinerated ash. A chain conveyor 124 is arranged in an inclined state in a casing (heat insulating chamber) 122 of the apparatus 121. In the casing 122 is formed an inlet port 123 which is joined with a discharge portion at the bottom of the melting furnace Molten slag S is poured from the discharge portion into the casing 122 through the inlet port 123.

The chain conveyor 124 includes a pair of driven sprockets 124a arranged at one lengthwise end of the casing 122, the sprockets 124a being spaced apart by a specified distance, and a pair of drive sprockets 124b which are driven by a motor M provided above the casing 122. A pair of endless chains 124c are wound on the corresponding sprockets 124a, 124b in a circulatory manner.

Between the two chains 124c are arranged a plurality of molten slag containers 124d at specified intervals. Guide rollers 124e are mounted on the chains 124c at an outer side thereof at given intervals. The respective guide rollers 124e are rollable on corresponding rails 124f about horizontal axes thereof as shown in Fig. 13A. In other words, the circulatory driving of the chains 124c transports the molten slag containers 124 forward (to the right in the drawing of Fig. 12).

Below a forward end of the casing 122 with respect to a transport direction is formed a discharge port 122a including a double slide gate 122b. When the double slide gate 122 is opened, solidified slag C released from the molten slag container 124d which has turned downward falls into a solidified slag container 125 arranged right below the discharge port 122a. A port 122c defined at an upper center portion of the casing 122 in the longitudinal direction functions to maintain the temperature in the casing 122 at a specified value by admitting high temperature exhaust gas in the melting furnace into the casing 122 by an aspiration action of an ejector 126.

In this apparatus, the solidified slag C released into the solidified slag container 125 through the discharge port 122a is crushed by a known crusher to be used as roadbed material. According to a method to be described later, it is extremely important to control the cooling rate of the molten slag S in the case where the molten slag S is obtained by cooling the solidified slag C. This control is executed according to a method of changing a rotating speed of the motor M so as to change an amount of molten slag S filled into the molten slag container 124d, a method of changing the capacity of the molten slag container 124d, a method of adhering a heat insulating member to the molten slag container 124d, or the like.

Since there is a temperature distribution of the molten slag S in the container 124d, the cooling rate differs. For example, the cooling rate is high at a portion of the molten slag S close to the outer wall of the molten slag container 124d since a large amount of heat is radiated externally. On the other hand, the cooling rate is slowest at a center portion of the molten slag S since the slag temperature is highest. The difference in the cooling rate is determined by a filled amount of slag, the capacity of the molten slag container 124d, and the degree of heat insulation. For example, it is possible to predict the cooling rate based on a temperature measurement by a thermocouple and a thermal performance rating. A crystallization proportion of the molten slag in the container 124d can be predicted based on the difference in the cooling rate, and accordingly the cooling rate becomes controllable.

There will be next described results of an experiment conducted using this apparatus.

In the case where the rotating speed of the motor M was increased so as to fill 2 liters of molten slag S obtained from raw ash having the basicity of 0.24 in the molten slag container 124d of the capacity of 30 liters and the filled molten slag S was cooled in the solidified slag producing apparatus 121, the cooling rate of the molten slag S became lower than 28°C/min. in a temperature range of 1000 to 1200°C and all the molten slag S became glassy solidified slag C. The corrected CBR value of the solidified slag C was 48.5%, and it was found out that this slag could not be used as the upper layer subgrade material.

Further, in the case where 30 liters of molten slag S obtained from raw ash having the basicity of 0.8 was filled in the molten slag container 124d covered with a heat insulating member and having the capacity of 30 liters and was cooled while being transported, the following results were obtained. The cooling rate of 35% of the molten slag at the center of the container 124d became lower than 0.4°/min. in a temperature range of 1000 to 1200°C, and the molten slag became crystallized. The cooling rate of the molten slag at an outer peripheral portion of the container 124d became higher than 0.4°C/min. and the molten slag became glassy. The corrected CBR value of this solidified slag C was 143%, and it was found out that this slag C could be used as the upper layer subgrade material not to mention as the lower layer subgrade material. Further, the specific gravity in saturated surface-dry condition of the solidified slag C was 2.9, the absorption thereof was 0.52, the Los Angeles rubbing loss thereof was 30.4%, and the chemical stability thereof was 0.7%. Thus, it was found out that the solidified slag C satisfied all the other discrimination standards as the subgrade material.

Next, in the case where 160 liters of molten slag S obtained from raw ash having the basicity of 1.0 was filled in the molten slag container 124d covered with a heat insulating member and having the capacity of 160 liters and was cooled while being transported, the cooling rate of the molten slag S became 1.0°C/min. or lower at any point of the container 124d in a temperature range of 1000 to 1200°C, and there was obtained completely crystalline solidified slag C. The corrected CBR value of this solidified slag C was 35.7%, and it was found out that this slag C could not be used as the lower layer subgrade material.

As seen from the above, as a result of changing the cooling rate of the molten slag S and the kinds of raw ash, there was obtained a graph as shown in Fig. 11. This graph shows a relationship between a volumetric proportion of crystalline slag in thus produced solidified slag C and the corrected CBR value.

According to this graph, in the case of the aggregates obtained from solidified slag whose volumetric proportion of crystalline slag is 13 to 54%, the corrected CBR value thereof becomes 80% or higher and the aggregates can be used not only as the roadbed material and lower layer subgrade material but also as the upper layer subgrade material. An improvement in the corrected CBR value is considered to result from that the glassy slag is filled in the clearances between the aggregates made of crystalline slag to make the aggregates firm.

Contrary to this, if the volumetric proportion of the crystalline slag becomes in excess of 54%, the corrected CBR value becomes lower than 80%. This is because an absolute amount of glassy slag is insufficient to fill the clearances between the aggregates made of crystalline Slag although the glassy slag is filled in those clearances, and there remain the clearances unfilled with the glassy slag. Further, if the volumetric proportion of the crystalline slag becomes lower than 13%, the corrected CBR value becomes lower than 80% similar to the case where there remain the clearances unfilled with the glassy slag since the glassy slag originally having inferior strength compared to the crystalline slag forms a large proportion of the aggregates.

The range for the cooling temperature has preferably a specified temperature width including in the middle thereof a crystal precipitation point as described in detail in the second embodiment. More preferably, the molten slag S is cooled gradually in a temperature range of about 1000 to 1200°C. The cooling rate is preferably set according to the basicity of raw material as shown in TABLE-1 similar to the second embodiment. The reason for this is as seen from the data shown in TABLE-1.

Accordingly, the hard aggregates having high strengthity are manufactured reliably while reducing the cooling rate sufficiently in the low basicity region while the hard aggregates having high strengthity are manufactured efficiently at a relatively high cooling rate in the high basicity region by cooling the molten slag gradually under the conditions shown in TABLE-1. In addition, according to the method of this embodiment, it is not necessary to crystallize all the molten slag as described above. Thus, a time required to cool the molten slag can be shortened further and the hard aggregates used as the subgrade material can be manufactured at an improved efficiency.

The foregoing is described with respect to the method of cooling the molten slag so as to crystallize 13 to 54% thereof in volume. However, it may be also appropriate to , after obtaining the subgrade material whose volumetric proportion of crystalline substance is lower than 13% or higher than 54%, mix crystalline aggregates or glassy aggregates with the obtained subgrade material according to needs so that the volumetric proportion of crystalline substance in the finally obtained mixed aggregates lies in a range of 13 to 54%.

The invention is not limited to the foregoing embodiments, but may take the following modes for example.
(1) Although the molten slag containers 24 are moved using the trucks 25 in the first embodiment, it does not matter whichever conveyor means is used to move the molten slag containers according to the invention. Besides the belt conveyor shown in the third embodiment, various other transport means including a pusher and a walking rod are applicable.
(2) According to the invention, it is sufficient that the molten slag containers are shaped into a container open upward. The molten slag containers may take other shapes including unillustrated truncated cone, truncated pyramids, etc. In the case where the molten slag containers are shaped into a truncated cone, a radiating area can be made smaller compared to a truncated conic container having the same volume, thereby enabling the cooling rate of the molten slag to be slowed further.
(3) Although the load cells 80 are used as a means for detecting that the predetermined amount of molten slag has been poured into the molten slag container 24, it is also possible to use a level sensor for detecting the level of molten slag in the molten slag container 24 with the use of radiant rays. In the case where a pouring amount of molten slag is constant, the respective molten slag containers 24 may be moved upon the lapse of a specified period.
(4) A means for closing the lids 28 is not limited to the aforementioned lids 98, but may be pushers for pressing the lids 28 from opposite sides.
(5) Although the molds 32, 34 are provided on the inner and outer surfaces of the heat insulating member 20 in each molten slag container 24 in the first embodiment, the effects similar to those described in the foregoing embodiments are obtainable by providing at least the inner mold 32 on the inner surface of the heat insulating member 30.
(6) Although the temperature in the heat insulating chamber 10 is controlled using 500°C as a reference temperature in the first embodiment, the reference temperature may be set desirably according to the overall structure of the apparatus. It may be also appropriate to set the temperature at any value in a permissible temperature range wherein the set temperature is variable.
(7) In the first embodiment, the crane rope 116 is used to load and unload the molten slag containers 24 to and from the heat insulating chamber 10. However, a conveyor or like means may be used to load and unload the containers 24 in place of the crane rope 116.
(8) The third embodiment is described with respect to the case where the apparatus different from the one described in the first embodiment is used to produce the hard aggregates. However, it goes without saying that the method of the third embodiment can be implemented in the apparatus of the first embodiment.

## Claims

1. A molten slag container into which molten slag made from waste is poured, comprising:
a heat insulating member formed into a container open upward; and
a mold made of metal more excellent in the corrosive resistance against the molten slag than the heat insulating member and provided at least on an inner side surface of the heat insulating member.

2. A molten slag container according to claim 1 further comprising a lid openably and closably mounted at a top portion of the molten slag container.

3. A molten slag container according to claim 2 wherein the lid is double hinged.

4. A method of producing hard aggregates from waste using the molten slag container according to any one of claims 1 to 3, comprising the steps of:
melting the waste in a melting furnace to produce molten slag whilst the molten slag container is loaded into a heat insulating chamber whose inner temperature is maintained at a predetermined value suitable to cool the molten slag, gradually; and
pouring the molten slag into the molten slag container in the heat insulating chamber so as to cool the molten slag in the molten slag container.

5. A method according to claim 4 wherein, after melting raw ash which is incinerated ash, the molten slag is cooled at a cooling rate of 0.4°C/min. in the case where a weight ratio of CaO to SiO₂ in the raw ash is smaller than 0.9; at the cooling rate of 0.7°C/min. in the case where the weight ratio of CaO to SiO₂ in the raw ash is not smaller than 0.9 but smaller than 1.0; at the cooling rate of 1.5°C/min. in the case where the weight ratio of CaO to SiO₂ in the raw ash is not smaller than 1.0 but smaller than 1.1; at the cooling rate of 2.0°C/min. in the case where the weight ratio of CaO to SiO₂ in the raw ash is not smaller than 1.1 but smaller than 1.2; at the cooling rate of 3.0°C/min. in the case where the weight ratio of CaO to SiO₂ in the raw ash is not smaller than 1.2 but smaller than 1.3; and at the cooling rate of 5.0°C/min. in the case where the weight ratio of CaO to SiO₂ in the raw ash is not smaller than 1.3.

6. A method according to claim 5 wherein the weight ratio of CaO to SiO₂ is set not smaller than 0.8 but not larger than 1.3.

7. A method according to claim 5 or 6 wherein the volume proportion of crystalline substances in the solidified slag obtained by cooling the molten slag is adjusted in a range not smaller than 13% and not larger than 54%.

8. An apparatus for producing hard aggregates from waste using the molten slag containers according to any one of claims 1 to 3, comprising:
a melting furnace for melting the waste and discharging the molten waste as molten slag through a discharge port defined at the bottom thereof;
a heat insulating chamber into which the discharge port is inserted from above; heat retaining means for maintaining an internal temperature of the heat insulating chamber at a value suitable to cool the molten slag gradually; and
conveyance means for conveying a plurality of molten slag containers one after another to a position where the molten slag container receives the molten slag discharged through the discharge port of the melting furnace.

9. An apparatus according to claim 8 wherein the heat retaining means includes gas aspiration means for aspirating gas in the heat insulating chamber so as to promote the outflow of combustion gas from the melting furnace to the heat insulating chamber through the discharge port.

10. An apparatus according to claim 9 wherein the heat retaining means includes temperature detecting means for detecting the temperature in the heat insulating chamber and temperature control means for controlling the operation of the gas aspiration means in accordance with the detected temperature.

## Patentansprüche

1. Behälter für geschmolzene Schlacke, in den geschmolzene Schlacke eingeleert wird, die aus Abfall hergestellt ist, umfassend:
ein wärmeisolierendes Glied, das als ein nach oben hin offener Behälter ausgebildet ist; und
eine Form, die aus einem Metall hergestellt ist, das in seiner Korrosionsbeständigkeit gegenüber der geschmolzenen Schlacke hervorragender ist als das wärmeisoliernde Glied, und die zumindest auf einer inneren Fläche des wärmeisolierenden Gliedes angebracht ist.

2. Behälter für geschmolzene Schlacke nach Anspruch 1, weiters umfassend einen Deckel, der zum Öffnen und zum Schließen an einem oberen Abschnitt des Behälters für geschmolzene Schlacke angebracht ist.

3. Behälter für geschmolzene Schlacke nach Anspruch 2, wobei der Deckel doppelt angeschlagen ist.

4. Verfahren zur Herstellung harter Zuschlagstoffe aus Abfall unter Verwendung des Behälters für geschmolzene Schlacke nach einem der Ansprüche 1 bis 3, umfassend die folgenden Schritte:
Schmelzen des Abfalls in einem Schmelzofen, um geschmolzene Schlacke zu erzeugen, während der Behälter für geschmolzene Schlacke in eine wärmeisolierende Kammer geladen wird, deren Innentemperatur auf einem vorbestimmten Wert gehalten wird, der dazu geeignet ist, die Schlacke allmählich abzukühlen; und
Einleeren der geschmolzenen Schlacke in den Behälter für geschmolzene Schlacke in der wärmeisolierenden Kammer, um die geschmolzene Schlacke in dem Behälter für geschmolzene Schlacke abzukühlen.

5. Verfahren nach Anspruch 4, wobei nach dem Schmelzen von Rohasche, die Verbrennungsasche ist, die geschmolzene Asche mit einer Abkühlungs-Rate von 0,4°C/min abgekühlt wird, und zwar in dem Fall, in dem ein Gewichtsverhältnis von CaO zu SiO₂ in der Rohasche kleiner als 0,9 ist; mit einer Abkühlungs-Rate von 0,7°C/min in dem Fall, in dem das Gewichtsverhältnis von CaO zu SiO₂ in der Rohasche nicht kleiner als 0,9, jedoch kleiner als 1,0 ist; mit der Abkühlungs-Rate von 1,5°C/min in dem Fall, in dem ein Gewichtsverhältnis von CaO zu SiO₂ in der Rohasche nicht kleiner als 1,0, jedoch kleiner als 1,1 ist; mit der Abkühlungs-Rate von 2,0°C/min in dem Fall, in dem ein Gewichtsverhältnis von CaO zu SiO₂ in der Rohasche nicht kleiner als 1,1, jedoch kleiner als 1,2 ist; mit der Abkühlungs-Rate von 3,0°C/min in dem Fall, in dem das Gewichtsverhältnis von CaO zu SiO₂ in der Rohasche nicht kleiner als 1,2, jedoch kleiner als 1,3 ist; und mit einer Abkühlungs-Rate von 5,0°C/min in dem Fall, in dem das Gewichtsverhältnis nicht kleiner als 1,3 ist.

6. Verfahren nach Anspruch 5, wobei das Gewichtsverhältnis von CaO zu SiO₂ auf nicht weniger als 0,8, jedoch nicht mehr als 1,3 eingestellt wird.

7. Verfahren nach Anspruch 5 oder 6, wobei der Volumsanteil von kristallinen Substanzen in der verfestigten Schlacke, die durch Abkühlen der geschmolzenen Schlacke erhalten worden ist, in einem Bereich von nicht weniger als 13% und von nicht mehr als 54% eingestellt wird.

8. Vorrichtung zur Herstellung harter Zuschlagstoffe aus Abfall unter Verwendung des Behälters für geschmolzene Schlacke nach einem der Ansprüche 1 bis 3, umfassend:
einen Schmelzofen zum Schmelzen des Abfalls und zum Entleeren des geschmolzenen Abfalls als geschmolzene Schlacke durch eine Ausstoß-Öffnung, die an seiner Unterseite vorgesehen ist;
eine wärmeisolierende Kammer, in die die Ausstoß-Öffnung von oben her eingeführt wird;
ein Wärme rückhaltendes Mittel zum Aufrechterhalten einer Innentemperatur der wärmeisolierenden Kammer auf einem Wert, der dazu geeignet ist, die geschmolzene Schlacke allmählich abzukühlen; und
Förder-Mittel zum Fördern einer Mehrzahl von Behältern für geschmolzene Schlacke, einer nach dem anderen, in eine Stellung, in der Behälter für geschmolzene Schlacke die geschmolzene Schlacke aufnimmt, die durch die Ausstoß-Öffnung des Schmelzofens ausgestoßen wird.

9. Vorrichtung nach Anspruch 8, wobei das Wärme rückhaltende Mittel ein Gas-Ansaug-Mittel umfaßt, um Gas in die wärmeisolierende Kammer anzusaugen, um so die Ausströmung von Verbrennungsgas aus dem Schmelzofen durch die Ausstoß-Öffnung in die wärmeisolierende Kammer zu fördern.

10. Vorrichtung nach Anspruch 9, wobei das Wärme rückhaltende Mittel ein Temperatur-Erfassungs-Mittel umfaßt, um die Temperatur in der wärmeisolierenden Kammer zu erfassen, sowie ein Temperatur-Steuerungs-Mittel, um den Betrieb des Gas-Ansaug-Mittels in Übereinstimmung mit der erfaßten Temperatur zu steuern.

## Revendications

1. Un récipient à scories fondues, dans lequel les scories fondues constituées de déchets sont coulées, comprenant :
un organe d'isolation thermique, qui constitue un conteneur ouvert vers le haut,
un moule constitué d'un métal présentant une résistance à la corrosion par les scories fondues supérieure à celle de l'organe d'isolation thermique et prévu au moins sur une surface latérale intérieure de l'organe d'isolation thermique.

2. Un récipient pour scories fondues selon la revendication 1, comprenant en outre un couvercle pouvant être ouvert et fermé, monté sur la partie supérieure du récipient pour scories fondues.

3. Un récipient pour scories fondues selon la revendication 2, dans lequel le couvercle est à double articulation.

4. Un procédé de production d'agrégats durs à partir de déchets par utilisation du récipient à scories fondues selon l'une quelconque des revendications 1 à 3, comprenant les étapes consistant à :
faire fondre les déchets dans un four de fusion afin de produire des scories fondues tandis que le récipient à scories fondues est chargé dans une chambre à isolation thermique dont la température intérieure est maintenue à une valeur prédéterminée convenant pour obtenir un refroidissement graduel des scories fondues; et
couler les scories fondues dans le récipient à scories fondues, se trouvant dans la chambre à isolation thermique, de manière à refroidir les scories fondues se trouvant dans le récipient à scories fondues.

5. Un procédé selon la revendication 4, dans lequel, après fusion de la cendre brute, qui est de la cendre d'incinération, les scories fondues sont refroidies à une vitesse de refroidissement de 0,4°C/min, dans le cas où le rapport de poids entre CaO et SiO₂ dans les cendres brutes est inférieur à 0,9; à la vitesse de refroidissement de 0,7°C/min dans le cas où le rapport de poids entre CaO et SiO₂ dans les cendres brutes n'est pas inférieur à 0,9, mais inférieur à 1,0; à la vitesse de refroidissement de 1,5°C/min dans le cas où le rapport de poids entre CaO et SiO₂ dans la cendre brute n'est pas inférieur à 1,0 mais est inférieure à 1,1; à la vitesse de refroidissement de 2,0°C/min dans le cas où le rapport de poids entre CaO et SiO₂ dans la cendre brute n'est pas inférieur à 1,1 mais est inférieur à 1,2; à la vitesse de refroidissement de 3,0°C/min dans le cas où le rapport de poids entre CaO et SiO₂ dans la cendre brute n'est pas inférieur à 1,2 mais est inférieur à 1,3; à la vitesse de refroidissement de 5,0°C/min dans le cas où le rapport de poids entre CaO et SiO₂ dans la cendre brute n'est pas inférieur à 1,3.

6. Un procédé selon la revendication 5, dans lequel le rapport de poids entre CaO et SiO2 n'est pas rendu inférieure à 0,8, mais n'est pas supérieure à 1,3.

7. Un procédé selon la revendication 5 ou 6, dans lequel la proportion en volume de substances cristallines dans la scorie solidifiée obtenue par refroidissement de la scorie fondue est ajustée pour se trouver dans une plage faisant qu'elle n'est pas inférieure à 13 % et pas supérieure à 54 %.

8. Un appareil de production d'agrégats durs à partir de déchets, par utilisation des récipients à scories fondues selon l'une quelconque des revendications 1 à 3, comprenant :
un four de fusion pour fondre les déchets et décharger les déchets fendus à titre de scores fondues par un orifice d'évacuation défini en sa partie fond;
une chambre à isolation thermique dans laquelle l'orifice de décharge est inséré par le dessus;
un moyen de rétention de chaleur destiné à maintenir une température interne dans la chambre à isolation thermique, à une valeur convenant pour refroidir graduellement les scories fondues; et
un moyen de transport pour assurer le transport d'une pluralité de récipients à scories fondues l'un après l'autre en une position à laquelle le récipient à scories fondues reçoit les scories fondues déchargées par l'orifice d'évacuation du four de fusion.

9. Un appareil selon la revendication 8, dans lequel le moyen de rétention de chaleur comprend un moyen d'aspiration de gaz destiné à aspirer du gaz se trouvant dans la chambre à isolation thermique, de manière à favoriser l'écoulement de sortie des gaz de combustion venant du four de fusion vers la chambre à isolation thermique en passant par l'orifice d'évacuation.

10. Un appareil selon la revendication 9, dans lequel le moyen de rétention de chaleur comprend un moyen de détection de température destiné à détecter la température dans la chambre à isolation thermique et un moyen de commande de température pour commander le fonctionnement du moyen d'aspiration de gaz en fonction de la température détectée.
